# EUROPÄISCHE PATENTSCHRIFT

(11) **EP 1 000 277 B1**
(45) Veröffentlichungstag und Bekanntmachung des Hinweises auf die Patenterteilung: **16.05.2001**
(21) Anmeldenummer: 98938691.7
(22) Anmeldetag: 20.07.1998
(51) Int. Cl.: F16H 15/38, F16H 57/02

(54) **STUFENLOSES REIBRADGETRIEBE**
INFINITELY VARIABLE TOROIDAL DRIVE
BOITE DE VITESSES TOROIDALE VARIABLE

(30) Priorität: 26.07.1997 DE 19732275
(43) Veröffentlichungstag der Anmeldung: 17.05.2000
(73) Patentinhaber: ZF FRIEDRICHSHAFEN Aktiengesellschaft, 88038 Friedrichshafen (DE)
(72) Erfinder: KUHN, Walter, D-88045 Friedrichshafen (DE); WAFZIG, Jürgen, D-88097 Eriskirch (DE)
(86) Internationale Anmeldenummer: EP9804495
(87) Internationale Veröffentlichungsnummer: WO9905434

(56) Entgegenhaltungen:
- EP-A2- 0 420 157
- US-A- 5 033 322
- US-A- 5 144 850

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Das Grundprinzip eines derartigen stufenlosen Reibradgetriebes ist bereits in der US-2 152 796, die im Jahre 1939 veröffentlicht wurde, beschrieben. Darin sind zwei Paare konkaver Eingangs- und Ausgangsscheiben vorgesehen, zwischen denen schwenkbar gelagerte Reibräder angeordnet sind, so daß ein über eine Eingangswelle den Eingangsscheiben und den Reibrädern übertragenes Drehmoment je nach Relativstellung der Reibräder mit einem davon abhängigen Übersetzungsverhältnis über die Ausgangsscheiben, eine Zahnradstufe und eine Hohlwelle einem Summierungsgetriebe in Form eines Planetengetriebes zugeführt wird. Der Steg des Planetengetriebes treibt eine Ausgangswelle, die mit den Antriebsrädern, z. B. eines Kraftfahrzeuges, verbunden ist. Die Ausgangswelle kann dabei parallel zur und im Abstand von der Ausgangswelle angeordnet sein. Das Ausgangszahnrad und die beiden Ausgangsscheiben sind drehbar auf einer Hülse gelagert, die an ihren Enden in Lagerstützen abgestützt ist. Die Anordnung der Lagerstützen zwischen jeweils einer Ein- und Ausgangsscheibe setzt einen genügend großen Bauraum zwischen diesen Scheiben voraus.

Das Getriebe nach der US-PS 3 739 658 weist ebenfalls einen zweizügigen Variator mit zwei paarweise angeordneten Ein- und Ausgangsscheiben auf, zwischen denen schwenkbar gelagerte Reibräder angeordnet sind. Bei dieser Konstruktion ist eine Lagerstütze vorhanden, die Bestandteil des Gehäuses ist und die räumlich zwischen den beiden Ausgangsscheiben liegend angeordnet ist. Die von den Ausgangsscheiben abfließende Leistung wird über ein Planetengetriebe, das zudem als Differential wirkt, einer Hohlwelle zugeleitet. Die Hohlwelle ist mit dem Ausgangszannrad drehfest verbunden und wird über Kugellager in der Lagerstütze drehbar gehalten.

Das Ausgangszahnrad steht mit einem Zahnrad in Antriebsverbindung, das drehfest am Gehause eines Drehmomentwandlers befestigt ist. Dieser treibt die Ausgangswelle des Getriebes. Die Anordnung des Drehmomentwandlers am Eingang der Ausgangswelle bedingt einen relativ großen Achsabstand zwischen Ein- und Ausgangswelle des Getriebes. Damit sind die Anwendungsfälle für dieses Getriebe stark eingeschränkt, weil der erforderliche Einbauraum nicht immer zur Verfügung steht.

Aus der US-4 893 517 ist ein stufenloses Reibradgetriebe bekannt mit einer Eingangswelle, die ein Gehäuse durchsetzt. Das Gehäuse ist mittels einer Trennwand in zwei Hohlräume unterteilt, in denen jeweils eine Eingangsscheibe und eine ihr gegenüberliegende Ausgangsscheibe mit dazwischenliegenden Reibrädern gelagert sind, wobei sowohl die Eingangsscheibe als auch die Ausgangsscheibe in den beiden Hohlräumen auf einer gemeinsamen Achse liegen, zu der die Reibräder zur Erzielung der gewünschten Geschwindigkeitsübersetzung verschwenkt werden können. Die beiden Paare aus Eingangsscheiben und Ausgangsscheiben sind spiegelsymmetrisch zueinander in den beiden Hohlräumen derart angeordnet, daß die beiden Ausgangsscheiben nebeneinander liegen, und zwar zu beiden Seiten der die beiden Hohlräume voneinander trennenden Trennwand, in der ein Zahnrad gelagert ist, welches von den beiden Ausgangsscheiben gemeinsam mit dem Ausgangsdrehmoment beaufschlagt wird.

Dieses Drehmoment wird über ein weiteres, mit der Ausgangswelle verbundenes Zahnrad letzterer übertragen, die parallel zur Ausgangswelle angeordnet ist, und zwar derart, daß sie nur einen der beiden Hohlräume durchsetzt und mit dem entsprechenden Ende in der Trennwand gelagert ist.

Die Trennwand kann zusammen mit dem in ihr gelagerten Zahnrad und den dazu gehörigen Lagern und Abstandshaltern als vormontierte Einheit in das Gehäuse eingesetzt und mit diesem verschraubt werden. Die Moglichkeit der Vormontage ist jedoch auf wenige Einzelteile beschränkt; der Montageaufwand zur Komplettierung des Getriebes ist daher immer noch beträchtlich. Ein weiterer, bauartbedingter Nachteil des Getriebes besteht darin, daß sehr große Kräfte in das Getriebegehäuse eingeleitet werden, was eine stabile Bauweise - bei entsprechend hohem Gewicht - erforderlich macht.

Auch die gattungsbildende US 5 033 322 beschreibt ein stufenloses Reibradgetriebe, das grundsätzlich den gleichen Aufbau wie die oben beschriebenen Reibradgetriebe aufweist, das heißt, zwei Getriebeeinheiten in Form von jeweils einer Eingangsscheibe, einer Ausgangsscheibe und dazwischen verschwenkbar gelagerten Reibrädern. Um zu verhindern, daß bei einem derartigen Reibradgetriebe immer dann, wenn die eine Getriebeeinheit von der Steuervorrichtung angesteuert wird, die Träger für die Reibräder der anderen Getriebeeinheit Schwingungen ausgesetzt werden, wird bei diesem bekannten Reibradgetriebe eine mechanische Einrichtung vorgesehen, welche die Bewegung des Paars erster Träger für die Reibräder und des Paars zweiter Trager für die Reibräder zueinander verhindert. Diese Einrichtung besteht aus unteren und oberen Querlenkern (d. h. Jochen), die die Lager für die Träger (Drehzapfen) der Reibräder aufnehmen und die um gehäusefeste Zapfen schwenkbeweglich angeordnet sind. Die Querlenkerpaare sind, um eine Relativbewegung zueinander auszuschließen, über in Längsrichtung verlaufende Stangen miteinander starr verbunden. Dadurch sollen die auf die Träger durch die Reibräder einwirkenden Schwingungen eingeschränkt werden, so daß der Schlupf an der zweiten Getriebeeinheit verringert wird.

Aufgabe der vorliegenden Erfindung ist es, ein Reibradgetriebe zu schaffen, das erheblich leichter zu montieren ist, so daß die Herstellungskosten verringert werden und das ein geringeres Gewicht aufweist.

Ausgehend von einem stufenlosen Reibradgetriebe gemäß dem Oberbegriff des Anspruchs 1 erfolgt die Lösung dieser Aufgabe mit den im kennzeichnenden Teil dieses Anspruchs angegebenen Merkmalen; vorteilhafte Ausgestaltungen sind in den Unteransprüchen beschrieben.

Das erfindungsgemäße Getriebe bietet den Vorteil, daß der größte Teil der eingeleiteten Kräfte vom Rahmen aufgenommen wird, so daß das Gehäuse entlastet wird. Die Vormontage der wesentlichen Bauteile am Rahmen erleichtert und beschleunigt den Zusammenbau des Reibradgetriebes, da der Rahmen mit den vormontierten Teilen nach dem Einführen in das Gehäuse, welches erheblich leichter ausgeführt werden kann als die herkömmlichen Gehäuse, nur noch an wenigen Stellen mit letzterem zu verbinden ist.

Im folgenden wird die Erfindung anhand der Zeichnung näher erläutert, in der ein vorteilhaftes Ausführungsbeispiel der Erfindung dargestellt ist.
Es zeigen:

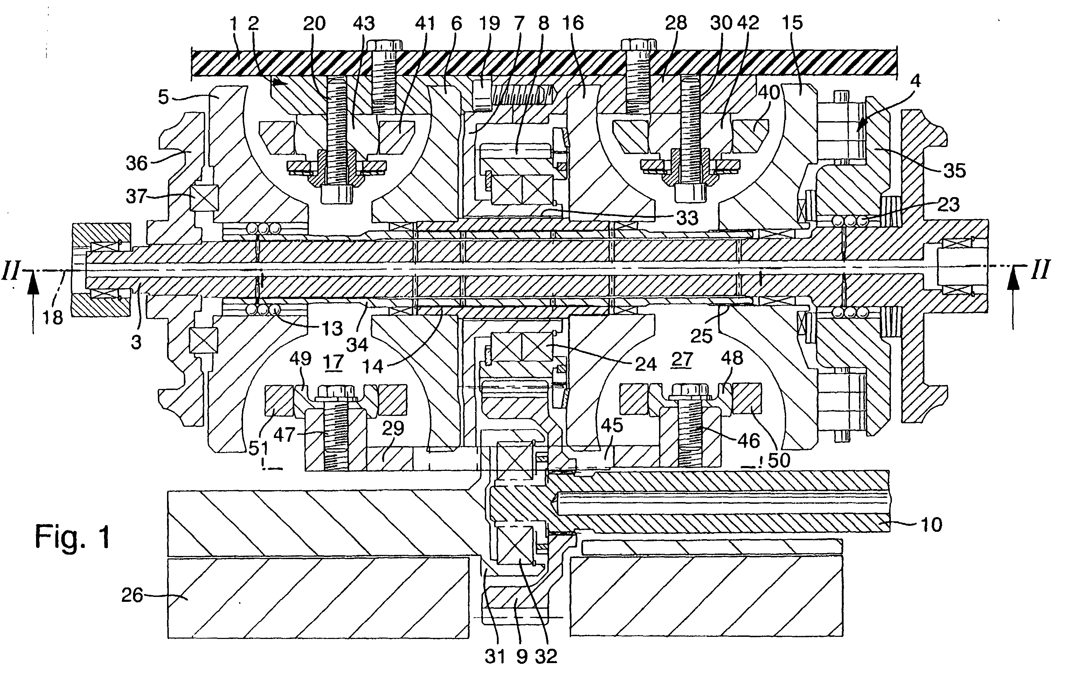

- Fig. 1: einen senkrechten Schnitt durch das erfindungsgemäße Reibradgetriebe,
- Fig. 2: einen um 90° dazu versetzten Schnitt entlang der Linie II-II von Fig. 1 und
- Fig. 3: einige Einzelteile des Reibradgetriebes in Draufsicht, in Unteransicht, in Schnittansicht und in Stirnansicht.

In den Figuren, in denen gleiche Teile mit gleichen Bezugszeichen versehen sind, bezeichnet 1 das Gehäuse des Reibradgetriebes (bzw. Toroidgetriebes), dessen Eingangswelle 3 mit einem nicht dargestellten Anfahrelement, z. B. mit einem Drehmomentwandler oder einer naßlaufenden Anfahrkupplung einer Antriebsmaschine eines Kraftfahrzeuges, verbunden ist. In dem Gehäuse 1 sind zwei Getriebeeinheiten koaxial zur Eingangswelle 3 angeordnet. Die eine Getriebeeinheit weist eine Eingangsscheibe 5 und eine Ausgangsscheibe 6 auf, deren einander zugewandte Oberflächen toroidförmig ausgestaltet sind; die andere Getriebeeinheit weist eine Eingangsscheibe 15 und eine ihr gegenüber angeordnete Ausgangsscheibe 16 auf, deren einander zugewandte Oberflächen ebenfalls toroidformig ausgestaltet sind. In den beiden Getriebeeinheiten sind jeweils vorzugsweise zwei Reibräder 11, 21 vorgesehen, die an schwenkbaren Trägern 12 und 22 befestigt sind, so daß sie bezüglich der Längsachse 18 der Eingangswelle 3 verschwenkt werden können. Die Reibräder 11, 21 stehen in reibschlussigem Kontakt mit den beiden ihnen zugewandten Oberflächen der Eingangsscheiben 5, 15 und der Ausgangsscheiben 6, 16, wobei die Reibrader einer Getriebeeinheit symmetrisch zur Achse der Eingangswelle 3 angeordnet sind.

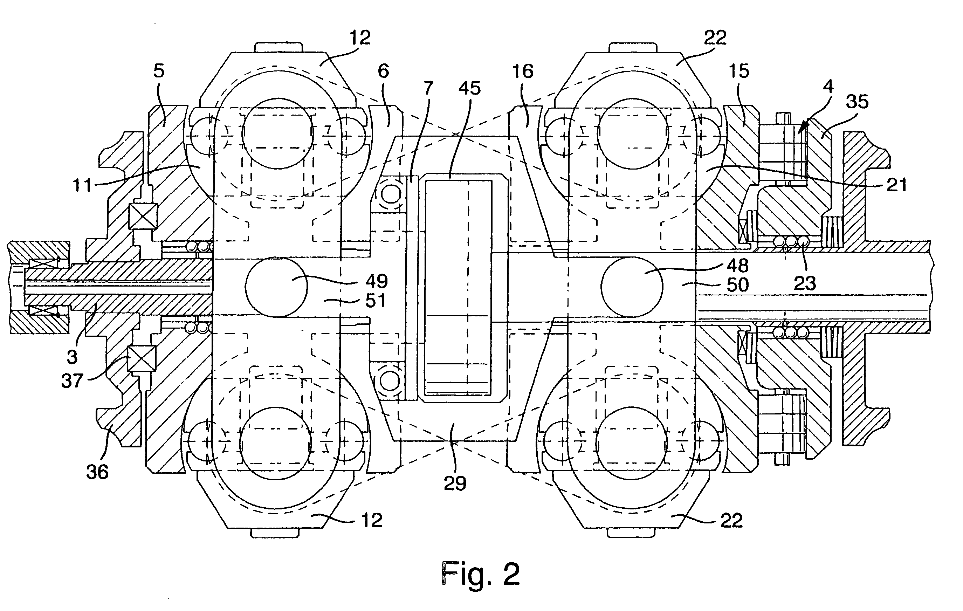

Werden nun die Reibräder 11, 21 durch die nicht im einzelnen dargestellte Verschwenkeinrichtung bezüglich der Längsachse der Eingangswelle 3 geneigt, so verschieben sich die Berührungspunkte des Umfangs der Reibräder 11, 21 aus der in Fig. 2 gezeigten Stellung entlang der toroidformigen Oberfläche sowohl der Eingangsscheiben als auch der Ausgangsscheiben, wodurch das Übersetzungsverhältnis zwischen einer Eingangs- und einer Ausgangsgeschwindigkeit kontinuierlich, d. h. stufenlos, eingestellt werden kann.

Alle Scheiben 5, 15, 6, 16 sind auf einer Drehmomentwelle 34 gelagert, die geringfügig in Axialrichtung relativ zum Gehäuse 1 verschiebbar ist; die Eingangsscheibe 5 der einen Getriebeeinheit ist drehfest mit der Drehmomentwelle bei 13 befestigt, jedoch axial rollend auf ihr gelagert. Auch die Eingangsscheibe 15 der anderen Getriebeeinheit ist drehfest durch eine Mitnahmeverzahnung 25 mit der Drehmomentwelle verbunden. Die beiden Ausgangsscheiben 6, 16 der beiden Getriebeeinheiten, die spiegelsymmetrisch zueinander und nebeneinander im Getriebe angeordnet sind, sind auf einer gemeinsamen Buchse 14 angeordnet, wobei die Ausgangsscheibe 16 fest mit einem Zahnrad 8 verbunden ist, das drehbar die Drehmomentwelle 34 umgibt. Ein Drehmoment, das von der einen Eingangsscheibe 5 der Ausgangsscheibe 6 und ein Drehmoment, das von der anderen Eingangsscheibe 15 der Ausgangsscheibe 16 übertragen wird, wird von den beiden drehfest mit der Buchse 14 verbundenen Ausgangsscheiben dadurch dem Zahnrad 8 übertragen, welches mit einem Zahnrad 9 kämmt, das mit der Ausgangswelle 10 fest verbunder. ist. Mit 24 sind Lager für das Zahnrad 8 bezeichnet und mit 32 ein Lager für die Ausgangswelle 10.

Mit 4 ist eine rollenförmige Anpreßeinrichtung bezeichnet, die zwischen der Eingangsscheibe 15 mit einer Kurvenbahr, und einer Scheibe 35 mit einer Kurvenbahn vorgesehen ist und die in Axialrichtung verschiebbar über ein Lager 23 auf der Eingangswelle gelagert ist sowie drehfest mit ihr verbunden ist, wobei sie mit Hilfe der Anpreßeinrichtung 4 die Eingangsscheibe 15 in Axialrichtung zur Ausgangsscheibe 16 hin beaufschlagt. Mit 36 ist eine Axialscheibe bezeichnet, an der sich die Eingangsscheibe 5 über ein Lager 37 abstützt. Mit Hilfe der Anpreßeinrichtung wird über die Welle 3 die Scheibe 5 zur Scheibe 6 über die Axialscheibe 36 bewegt.

Mit 7 ist ein topfformiges Lagerstutzglied 7 bezeichnet, das von der Drehmomentwelle 34 und der Buchse 14 mittig durchsetzt wird. Das Lagerstutzglied ist zwischen dem Zahnrad 8 und der Ausgangsscheibe 6 angeordnet, so daß es diese Bauteile voneinander trennt. Es ist derart ausgestaltet, daß es das mit der Ausgangsscheibe 16 fest verbundene Zahnrad 8 aufnimmt. Mit dem Zahnrad 8 kammt das Abtriebszahnrad 9 der Ausgangswelle 10.

Die Buchse 14 ist in der Bohrung des topfförmigen Lagerstützgliedes 7 über ein Nadellager 33 gelagert. Das Lagerstützglied 7 stützt sich an einem im Gehäuse 1 angeordneten Halterahmen 2 ab. Es ist mit einem oberen und mit einem unteren Rahmenbügel 28, 29 lösbar oder dauerhaft verbunden, d. h. verschraubt oder verschweißt. Der Halterahmen 2 wird aus dem Lagerstutzglied 7 und dem oberen sowie unteren Rahmenbügel 28, 29 gebildet. Die Rahmenbügel tragen über Zapfen 42, 43 obere Querjoche 40, 41 und über Zapfen 48, 49 untere Querjoche 50, 51, in denen die Träger 12, 22 für die Reibräder 11, 21 gelagert sind.

Die abtriebsseitige Lagerung des Zahnrades 8 weist einen stehenden Lagerinnenring auf, so daß das Abtriebszahnrad mit dem Außenring der Lagerung rotiert. Durch die Ausbildung des Lagerstützgliedes und die Anordnung der Lager 24 ist eine axial relativ kurze Reibradgetriebeausführung trotz breiter und damit hoch belastbarer Zahnräder 8, 9 möglich.

Mit 19 ist eine Befestigungsvorrichtung, z. B. eine Verschraubung zwischen dem topfförmigen Lagerstützglied 7 und dem oberen Rahmenbügel 28, bezeichnet. Mit 20, 30 sind Befestigungsvorrichtungen für die Zapfen 42, 43 der Querjoche 40, 41 und mit 46, 47 Befestigungsvorrichtungen für die Zapfen 48 und 49 der Querjoche 50, 51 bezeichnet.

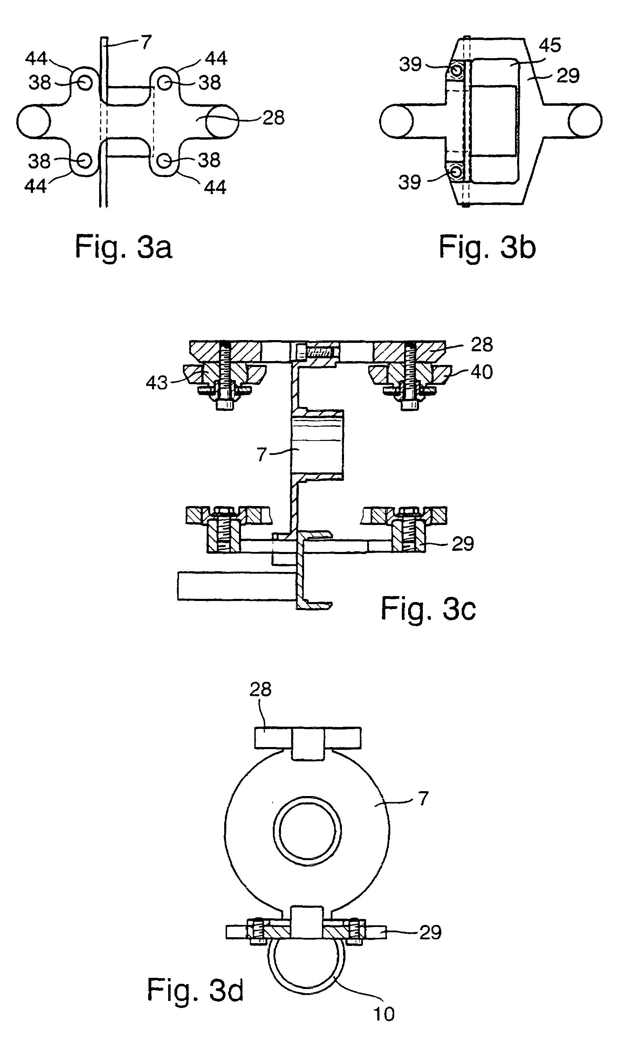

Fig. 3A zeigt den oberen Rahmenbügel 28 des Halterahmens 2, der eine im wesentlichen langgestreckte Form aufweist und an seinen beiden Längsseiten mit jeweils zwei Laschen 44 versehen ist, in denen jeweils eine Gewindeöffnung 38 vorgesehen ist, so daß der Halterahmen 2 mit dem Getriebegehäuse verschraubbar sein kann.

Fig. 3B zeigt den unteren Rahmenbügel 29 des Halterahmens 2, der im wesentlichen oval ausgestaltet ist und eine mittige Aussparung 45 aufweist, die vom Halteteil 31 und dem Abtriebszahnrad 9 teilweise durchsetzt wird und der mit Gewindeöffnungen 39 versehen ist, um ihn mit dem Lagerstützglied 7 zu verschrauben.

Der untere Rahmenbügel 29 kann mit dem Getriebegehäuse verschraubt werden.

Fig. 3C zeigt das zwischen dem oberen und dem unteren Rahmenbügel eingesetzte topfförmige Lagerstutzglied 7.

Fig. 3D zeigt eine Stirnansicht zwischen dem oberen Rahmenbugel 28 und dem unteren Rahmenbugel 29 des Halterahmens mit dem eingesetzten topfformigen Lagerstützglied 7. Der obere Rahmenbügel 28 und der untere Rahmenbügel 29 des Halterahmens 2 sind miteinander durch das Lagerstützglied 7 verbunden. Der Halterahmen 2 kann nun alle wesentlichen Elemente des erfindungsgemäßen Reibradgetriebes aufnehmen, die als vormontierte Einheit in das Gehäuse eingesetzt werden.

Die Ausgangswelle 10 ist mit ihrem Lager 32 in einem Halteteil 31 gelagert, welches in die Aussparung 45 im unteren Rahmenbügel 29 teilweise eintaucht. Das Lager 32 wird dabei vom Antriebszahnrad 9 umschlossen, während sich das Halteteil 31 auf dem Getriebegehause abstützt bzw. im Halterahmen 2 oder, wie dargestellt, an der Hydrauliksteuerung 26 befestigt ist. Das Lager 32 ist lösbar am Halteteil 31 befestigt; bei sich drehender Ausgangswelle 10 kann der Innenring oder der Außenring des Lagers 32 feststehen.

Während des Betriebes des erfindungsgemäßen Reibradgetriebes wird das z. B. vom Motor eines Kraftfahrzeuges stammende Drehmoment über die Eingangswelie und die Anpreßeinrichtung 4, 35 der Antriebsscheibe 15 übertragen, die wiederum das ihr übertragene Drehmoment über die zugehörigen Reibräder der Ausgangsscheibe 16 zufuhrt; ferner wird das Drehmoment der Antriebsscheibe 15 über die Micnahmeverzahnung 25 auf die Drehmomentwelle 34 übertragen und über das entsprechende zugehörige Lager 13 der Antriebsscheibe 5 übermittelt, die wiederum über die zugehörigen Reibräder die Ausgangsscheibe 6 beaufschlagt; sowohl in der ersten als auch in der zweiten Getriebeeinheit wird also das Drehmoment von der Eingangsscheibe zur Ausgangsscheibe über die dazwischen angeordneten Reibräder übertragen, die in vorgewählten, geneigten Ebenen abrollen.

Die beiden Ausgangsscheiben 6, 16 beaufschlagen gemeinsam das Zahnrad 8, welches die Ausgangsleistung über das Abtriebszahnrad 9 der Ausgangswelle 10 mit dem gewünschten Ubersetzungsverhältnis überträgt.

### Bezugszeichen

- 1: Gehäuse
- 2: Halterahmen
- 3: Eingangswelle
- 4: Anpreßeinrichtung
- 5: Eingangsscheibe
- 6: Ausgangsscheibe
- 7: Lagerstützglied
- 8: Zahnrad
- 9: Zahnrad
- 10: Ausgangswelle
- 11: Reibrad
- 12: Träger
- 13: Lager
- 14: Buchse
- 15: Eingangsscheibe
- 16: Ausgangsscheibe
- 17: Hohlraum
- 18: Längsachse
- 19: Befestigungsvorrichtung
- 20: Befestigungsvorrichtung
- 21: Reibrad
- 22: Träger
- 23: Lager
- 24: Lager
- 25: Mitnanmeverzahnung
- 26: Hydrauliksteuerung
- 27: Hohlraum
- 28: oberer Rahmenbügel
- 29: unterer Rahmenbügel
- 30: Befestigungsvorrichtung
- 31: Halteteil
- 32: Lager
- 33: Nadellager
- 34: Drehmomentwelle
- 35: Scheibe mit Kurvenbahn
- 36: Axialscheibe
- 37: Lager
- 38: Gewindeöffnung
- 39: Verbindungsöffnung
- 40: oberes Querjoch
- 41: oberes Querjoch
- 42: Zapfen
- 43: Zapfen
- 44: Laschen
- 45: Aussparung
- 46: Befestigungsvorrichtung
- 47: Befestigungsvorrichtung
- 48: Zapfen
- 49: Zapfen
- 50: unteres Querjoch
- 51: unteres Querjoch

## Patentansprüche

1. Stufenloses Reibradgetriebe mit folgenden Merkmalen:
- einem Gehäuse (1), einer Eingangswelle (3) und einer Ausgangswelle (10);
- einer koaxial zur Eingangswelle (3) angeordneten Drehmomentwelle (34);
- zwei koaxial zur Eingangswelle angeordneten Eingangsscheiben (5, 15) mit toroidförmigen Innenflächen;
- zwei koaxial zur Eingangswelle angeordneten Ausgangsscheiben (6, 16) mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind;
- mehreren Reibrädern (11, 21), die zwischen den Innenflächen der Paare aus Eingangsscheiben und Ausgangsscheiben verschwenkbar angeordnet sind zur Übertragung eines Drehmomentes von der Eingangsscheibe auf die zugehörige Ausgangsscheibe;
- einem Träger (12, 22) für jedes Reibrad (11, 21);
- oberen und unteren Querjochen (40, 41 und 50, 51), in denen die Träger (12, 22) gelagert sind;
- einer Verschwenkeinrichtung für die Träger der Reibräder;
- einer Anpreßanordnung (4) zur Erzeugung einer drehmomentabhängigen Axialkraft, um die Eingangsscheiben in Richtung Ausgangsscheiben zu beaufschlagen;
- einer Zahnradanordnung (8, 9), deren eines Zahnrad (9) mit der Ausgangswelle und deren anderes Zahnrad (8) zwischen den Ausgangsscheiben angeordnet und mit diesen drehmomentübertragend verbunden ist, und
- einem stationären Lagerstützglied (7), in dem ein Lager (24) für das mit den Ausgangsscheiben drehmomentübertragend verbundene Zahnrad (8) angeordnet ist,
**gekennzeichnet** durch die weiteren Merkmale:
- am Getriebegehäuse (1) ist ein Halterahmen (2) lösbar befestigt, der einen oberen Rahmenbügel (28) und einen unteren Rahmenbügel (29) aufweist,
- das Lagerstützglied verbindet den oberen Rahmenbügel (28) mit dem unteren Rahmenbügel (29), und
- an dem oberen Rahmenbügel (28) und dem unteren Rahmenbügel (29) sind über Befestigungsvorrichtungen (20, 30 bzw. 46, 47) Zapfen (42, 43 und 48, 49) befestigt, die die oberen und unteren Querjoche (40, 41 und 50, 51) tragen.

2. Reibradgetriebe nach Anspruch 1, dadurch **gekennzeichnet,** daß der obere Rahmenbügel (28) eine langgestreckte Form aufweist und auf jeder Längsseite mit zwei sich im wesentlichen halbkreisförmig nach außen erstreckenden Laschen (44) versehen ist, in denen Öffnungen (38) für die Verbindung mit dem Gehäuse (1) vorgesehen sind.

3. Reibradgetriebe nach Anspruch 1, dadurch **gekennzeichnet,** daß der untere Rahmenbügel (29) eine im wesentlichen ovale Form aufweist mit einer mittigen Aussparung (45), die von dem Halteteil (31) und dem Abtriebszahnrad (9) durchsetzt wird.

4. Reibradgetriebe nach einem der vorhergehenden Ansprüche, dadurch **gekennzeichnet**, daß die Zapfen (42, 43) lösbar mit dem oberen Rahmenbügel (28) und die Zapfen (48, 49) lösbar mit dem unteren Rahmenbügel (29) verbunden sind.

5. Reibradgetriebe nach einem der vorhergehenden Ansprüche, dadurch **gekennzeichnet**, daß das Lagerstützglied (7) mit dem oberen Rahmenbugel (28) und dem unteren Rahmenbügel (29) lösbar verbunden ist.

6. Reibradgetriebe nach einem der vorhergehenden Ansprüche, dadurch **gekennzeichnet**, daß das Lagerstützglied (7) mit dem oberen Rahmenbügel (28) und/ oder dem unteren Rahmenbügel (29) unlösbar verbunden ist.

7. Reibradgetriebe nach einem der vorhergehenden Ansprüche, dadurch **gekennzeichnet**, daß das Lagerstützglied (7) den Raum zwischen einer Ausgangsscheibe (6) und dem mit der anderen Ausgangsscheibe (16) verbundenen Zahnrad (8) durchsetzt.

8. Reibradgetriebe nach Anspruch 1, dadurch **gekennzeichnet**, daß der Halterahmen (2) ausschließlich über den oberen Rahmenbügel (28) mit dem Gehäuse (1) verbindbar ist.

9. Reibradgetriebe nach Anspruch 1, dadurch **gekennzeichnet**, daß der Halterahmen (2) ausschließlich über den unteren Rahmenbugel (29) mit dem Gehäuse (1) verbindbar ist.

10. Reibradgetriebe nach Anspruch 1, dadurch **gekennzeichnet**, daß der Halterahmen (2) mit der den stufenlos verstellbaren Getriebeteil des Reibradgetriebes bildenden Bauteilen (Eingangswelle 3 bis Zahnrad 8) eine vom Gehäuse (1) unabhängige Vormontageeinheit bildet.

## Claims

1. Continuously variable toroid drive with the following features:
- a housing (1), an input shaft (3) and an output shaft (10);
- a torque shaft (34) arranged coaxially to the input shaft (3);
- two input washers (5, 15) arranged coaxially to the input shaft and with torus-shaped inner faces;
- two output washers (6,16) arranged coaxially to the input shaft with torus-shaped inner faces whereby one input washer and one output washer form a pair and the symmetry of the output washers mirrors one another and they are arranged next to one another;
- several friction wheels (11, 21) which can be swivelled and are arranged between the inner faces of the pairs comprising input washers and output washers and are used to transfer torque from the input washer to the associated output washer;
- a carrier (12, 22) for each friction wheel (11, 21);
- upper and lower transverse yokes (40, 41 and 50, 51) in which the carriers (12, 22) are stored;
- a swivel fixture for the friction wheel carriers;
- a contact arrangement (4) to create a torque-dependent axial force so that the input washers can be subjected to load in the direction of the output washers;
- a gear arrangement (8, 9) of which one gear (9) is arranged with the output shaft and of which the other gear (8) is arranged between the output washers and the arrangement is connected with the these in a torque-transferring manner, and
- a stationary bearing support member (7) in which a bearing (24) is arranged for the gear (8) connected in a torque-transferring manner with the output washers,
**characterized** by the following additional features:
- a detachable retaining frame (2) is fastened to the transmission housing (1) and this frame contains one upper frame bracket (28) and one lower frame bracket (29),
- the bearing support member connects the upper frame bracket (28) with the lower frame bracket (29), and
- journals (42, 43 and 48, 49) are fastened to the upper frame bracket (28) and the lower frame bracket (29) by means of fastening fixtures (20, 30 and 46, 47) which carry the upper and lower transverse yokes (40, 41 and 50, 51).

2. Toroid drive in accordance with claim 1, **charac terized** in that the upper frame bracket (28) displays a long elongated shape and has two basically semicircular shaped and outward stretching links (44) fitted to each of its longitudinal sides in which apertures (38) are fitted for connection with the housing.

3. Toroid drive in accordance with claim 1, **charac terized** in that the lower frame bracket (29) displays an essentially oval shape with a central recess (45) which is occupied by the retaining section (31) and the output gear (9).

4. Toroid drive in accordance with one of the previous claims, **characterized** in that the detachable journals (42, 43) are connected with the upper frame bracket (28) and that the detachable journals (48, 49) are connected with the lower frame bracket (29).

5. Toroid drive in accordance with one of the previous claims, **characterized** in that the detachable bearing support member (7) is connected with the upper frame bracket (28) and the lower frame bracket (29).

6. Toroid drive in accordance with one of the previous claims, **characterized** in that the non-detachable bearing support member (7) is connected with the upper frame bracket (28) and/or the lower frame bracket (29).

7. Toroid drive in accordance with one of the previous claims, **characterized** in that the bearing support member (7) occupies the space between one output washer (6) and the gear (8) connected with the other output washer (16).

8. Toroid drive in accordance with claim 1, **charac terized** in that the retaining frame (2) can only be connected with the housing (1) via the upper frame bracket (28).

9. Toroid drive in accordance with claim 1, **charac terized** in that the retaining frame (2) can only be connected with the housing (1) via the lower frame bracket (29).

10. Toroid drive in accordance with claim 1, **charac terized** in that the retaining frame (2) and the components making up the continuously variable transmission section of the toroid drive (input shaft 3 to gear 8) form a pre-assembly unit independent of the housing (1).

## Revendications

1. Boîte de vitesses toroïdale à fonctionnement continu avec les caractéristiques suivantes :
- un carter (1), un arbre d'entrée (3) et un arbre de sortie (10);
- un arbre de transmission du couple (34) logé coaxialement par rapport à l'arbre d'entrée (3) ;
- deux disques d'entrée (5, 15) situés coaxialement par rapport à l'arbre d'entrée et ayant des surfaces internes toroïdales ;
- deux disques de sortie (6, 16) situés coaxialement par rapport à l'arbre d'entrée et ayant des surfaces internes toroïdales, sachant que respectivement un disque d'entrée et un disque de sortie forment un paire et les deux disques de sortie sont disposés symétriquement un par rapport à l'autre et juxtaposés ;
- plusieurs roues de friction (11, 21) qui sont montées de façon orientable entre les surfaces internes des paires de disques d'entrée et de disques de sortie afin de pouvoir transmettre un couple à partir du disque d'entrée au disque de sortie associé ;
- un support (12, 22) pour chaque roue de friction (11,21);
- une traverse supérieure et une traverse inférieure (40, 41 et 50, 51), dans lesquelles sont logés les supports (12, 22);
- un dispositif d'orientation des supports des roues de friction ;
- un ensemble de serrage (4) pour la création d'une force axiale dépendante du couple, afin de pouvoir mettre sous pression les disques d'entrée en direction des disques de sortie ;
- un ensemble d'engrenages (8, 9), dont le premier engrenage (9) est lié à l'arbre de sortie et l'autre engrenage (8) est interposé entre les disques de sortie, ledit engrenage étant lié à ceux-ci de façon à pouvoir transmettre le couple, et
- un élément de support du roulement stationnaire (7), dans lequel est logé un roulement (24) pour l'engrenage (8) lié aux disques de sortie de façon à pouvoir transmettre le couple ;
**caractérisée** par les caractéristiques ultérieures suivantes:
- sur le carter de la boîte de vitesses (1) est fixé un cadre de support (2) amovible, comportant un étrier supérieur (28) et un étrier inférieur (29) ;
- l'élément de support du roulement lie l'étrier supérieur (28) à l'étrier inférieur (29), et
- sur l'étrier supérieur (28) et sur l'étrier inférieur (29) sont fixés, au moyen de dispositifs de fixation (20, 30 ou 46. 47), des tenons (42, 43 et 48, 49) portant les traverses supérieures et inférieures (40, 41 et 50, 51).

2. Boîte de vitesses toroïdale selon la revendication 1, **caractérisée** en ce que l'étrier supérieur (28) a une forme allongée et en ce qu'il est doté sur chaque côté longitudinal de deux languettes (44), s'allongeant principalement sous forme semi-circulaire vers l'extérieur, dans lesquelles sont prévues des orifices (38) pour la connexion avec le carter (1).

3. Boîte de vitesses toroïdale selon la revendication 1, **caractérisée** en ce que l'étrier inférieur (29) a une forme ovale, avec une encoche (45) centrale, traversée par l'élément de support (31) et l'engrenage de sortie (9).

4. Boîte de vitesses toroïdale selon une des revendications ci-dessus, **caractérisée** en ce que les tenons (42, 43) sont liés sous forme amovible à l'étrier supérieur (28) et les tenons (48, 49) sous forme amovible à l'étrier inférieur (29).

5. Boîte de vitesses toroïdale selon une des revendications ci-dessus, **caractérisée** en ce que l'élément de support du roulement (7) est lié sous forme amovible à l'étrier supérieur (28) et à l'étrier inférieur (29).

6. Boîte de vitesses toroïdale selon une des revendications ci-dessus, **caractérisée** en ce que l'élément de support du roulement (7) est lié de façon inamovible à l'étrier supérieur (28) et/ou l'étrier inférieur (29).

7. Boîte de vitesses toroïdale selon une des revendications ci-dessus, **caractérisée** en ce que l'élément de support du roulement (7) traverse l'espace entre un disque de sortie (6) et l'espace de l'engrenage lié à l'autre disque de sortie (16).

8. Boîte de vitesses toroïdale selon la revendication 1, **caractérisée** en ce que le cadre de support (2) peut être lié exclusivement par l'intermédiaire de l'étrier supérieur (28) au carter (1).

9. Boîte de vitesses toroïdale selon la revendication 1, **caractérisée** en ce que le cadre de support (2) peut être lié exclusivement par l'intermédiaire de l'étrier inférieur (28) au carter (1).

10. Boîte de vitesses toroïdale selon la revendication 1, **caractérisée** en ce que le cadre de support (2) forme, conjointement avec les éléments (à partir de l'arbre d'entrée 3 jusqu'à l'engrenage 8) formant la partie de la boîte de vitesses toroïdale orientable, une unité pré-assemblée et indépendante du carter (1).
